# EUROPÄISCHE PATENTANMELDUNG

(11) **EP 4 768 362 A1**
(43) Veröffentlichungstag der Anmeldung: **01.07.2026**
(21) Anmeldenummer: 25222972.9
(22) Anmeldetag: 12.12.2025
(51) Int. Cl.: B62D 5/04

(54) **ANTIRATTERVORRICHTUNG FÜR NUTZFAHRZEUGE**

(30) Priorität: 24.12.2024 US 202419000751
(71) Anmelder: ZF Active Safety and Electronics US LLC, Livonia MI 48150 (US)
(72) Erfinder: KINTNER, Jason, West Lafayette, 47906 (US); ERICKSON, Kullin, Lafayette, 47905 (US); CLENDENNING, Mari, Lafayette, 47909 (US)
(74) Vertreter: ZF Friedrichshafen AG

(57) **Zusammenfassung**

Ein Schneckenrad und eine Schneckenwelle sind in einem Hohlraum eines Gehäuses angeordnet. Ein erstes Ende der Schneckenwelle ist in einem Lager angebracht, während ein zweites Ende der Schneckenwelle an eine Motorwelle koppelbar ist. Das Gehäuse definiert einen Durchgang, der sich senkrecht zur Richtung der Welle erstreckt und den Hohlraum mit einer Außenseite des Gehäuses verbindet. Ein erstes Ende eines in dem Durchgang angeordneten Stifts befindet sich mit dem Lager in Kontakt. Ein Steckbolzen ist an einer Öffnung des Durchgangs angeordnet, wobei eine Feder in dem Durchgang zwischen dem Steckbolzen und dem Stift angeordnet ist. Die Feder ist vorbelastet, um eine Vorbelastungskraft auf das Lager auszuüben, um die Schneckenwelle in der Richtung des Schneckenrades zu drücken, um ein Gewinde der Schneckenwelle ständig mit mehreren Zähnen des Schneckenrades in Eingriff zu halten.

## Beschreibung

### GEBIET

Die vorliegende Offenbarung betrifft eine Antirattervorrichtung für ein Lenkunterstützungssystem für Nutzfahrzeuge.

### HINTERGRUND

Lenkvorrichtungen herkömmlicher Nutzfahrzeuge sind oft an Lenkunterstützungssysteme gekoppelt. Lenkunterstützungssysteme stellen typischerweise einem Lenkrad ein Rückkopplungsdrehmoment bereit, was dem Fahrer ermöglicht, beim Lenken einen kontrollierten Widerstand zu spüren. Um dies zu erreichen, integrieren die Lenkunterstützungssysteme verschiedene Sensoren, elektronische Steuerungen und motorisierte Aktuatoren, die alle zusammenarbeiten, um eine natürliche Straßenrückmeldung basierend auf der Fahrzeuggeschwindigkeit, dem Lenkwinkel und anderen Faktoren zu simulieren. Während des Betriebs von Nutzfahrzeugen entwickeln mechanische Komponenten von Lenkunterstützungssystemen wie Lager, Buchsen oder Getriebesysteme Lücken oder Spiel, was ein Rattern verursacht, insbesondere wenn Nutzfahrzeuge über unebene Oberflächen fahren.

### ZUSAMMENFASSUNG

Die Ausführungsformen der vorliegenden Offenbarung stellen gemäß einem ersten Aspekt eine Schneckengetriebebaugruppe bereit, die Folgendes umfasst: eine Gehäuseeinheit mit einem Hohlraum; ein Schneckenrad, das drehbar in dem Hohlraum des Gehäuses angeordnet ist und mehrere Zähne aufweist, die entlang eines Umfangs des Schneckenrads angeordnet sind; eine Schneckenwelle, die in dem Hohlraum des Gehäuses angeordnet ist, sich in einer Richtung parallel zu einer Ebene des Schneckenrades erstreckt und ein Getriebe aufweist, das konfiguriert ist, in die mehreren Zähne einzugreifen, wobei ein erstes Ende der Schneckenwelle drehbar in einem Lager angebracht ist und ein zweites Ende der Schneckenwelle mechanisch an eine Motorwelle koppelbar ist, wobei das Gehäuse einen Durchgang definiert, der sich senkrecht zur Richtung der Schneckenwelle erstreckt und den Hohlraum mit einer Außenseite des Gehäuses verbindet; einen Stift, der in dem Durchgang angeordnet ist, wobei sich ein erstes Ende des Stifts mit dem Lager in Kontakt befindet; einen Steckbolzen, der an einer Öffnung des Durchgangs angeordnet ist; und eine Feder, die in dem Durchgang zwischen dem Steckbolzen und dem Stift angeordnet ist, wobei die Feder vorbelastet ist, um eine Kraft auf das Lager weg von dem Steckbolzen auszuüben, um die Schneckenwelle in der Richtung des Schneckenrades zu drücken, um das Gewinde der Schneckenwelle ständig mit den mehreren Zähnen in Eingriff zu halten.

Gemäß einer Implementierung des ersten Aspekts ist die Schneckengetriebebaugruppe Teil eines Lenkunterstützungssystems, das an eine elektrisch angetriebene Lenkung eines Nutzfahrzeugs gekoppelt ist.

Gemäß einer Implementierung des ersten Aspekts enthält das Lager einen Innenring und einen Außenring, wobei sich der Innenring des Lagers mit der Schneckenwelle in Kontakt befindet und sich der Außenring des Lagers mit dem ersten Ende des Stifts in Kontakt befindet.

Gemäß einer Implementierung des ersten Aspekts dreht sich die Schneckenwelle zusammen mit der Innenwelle des Lagers.

Gemäß einer Implementierung des ersten Aspekts ist ein ovaler Ring in dem Hohlraum und neben dem Außenring des Lagers angeordnet.

Gemäß einer Implementierung des ersten Aspekts ist das erste Ende des Stifts durch eine Öffnung in dem ovalen Ring eingesetzt, so dass sich das erste Ende des Stifts mit dem Lager in Kontakt befindet.

Gemäß einer Implementierung des ersten Aspekts sind mehrere O-Ringe neben dem ovalen Ring angeordnet.

Die Ausführungsformen der vorliegenden Offenbarung stellen gemäß einem zweiten Aspekt ein Verfahren zum Verringern des Ratterns in einer Schneckengetriebebaugruppe bereit, wobei das Verfahren Folgendes umfasst: Bereitstellen einer Gehäuseeinheit mit einem Hohlraum; Bereitstellen eines Schneckenrads, das drehbar in dem Hohlraum des Gehäuses angeordnet ist und mehrere Zähne aufweist, die entlang eines Umfangs des Schneckenrads angeordnet sind; Bereitstellen einer Schneckenwelle, die in dem Hohlraum des Gehäuses angeordnet ist, sich in einer Richtung parallel zu einer Ebene des Schneckenrades erstreckt und ein Gewinde aufweist, das konfiguriert ist, in die mehreren Zähne einzugreifen, wobei ein erstes Ende der Schneckenwelle drehbar in einem Lager angebracht ist und ein zweites Ende der Schneckenwelle mechanisch an eine Motorwelle koppelbar ist, wobei das Gehäuse einen Durchgang definiert, der sich senkrecht zu der Richtung der Schneckenwelle erstreckt und den Hohlraum mit einer Außenseite des Gehäuses verbindet; Anordnen eines Stifts in dem Durchgang, wobei sich ein erstes Ende des Stifts mit dem Lager in Kontakt befindet; Bereitstellen eines Steckbolzens, der an einer Öffnung des Durchgangs angeordnet ist; und Anordnen einer Feder in dem Durchgang zwischen dem Steckbolzen und dem Stift, wobei die Feder vorbelastet ist, um eine Kraft auf das Lager weg von dem Steckbolzen auszuüben, um die Schneckenwelle in der Richtung des Schneckenrads zu drücken, um das Gewinde der Schneckenwelle ständig mit den mehreren Zähnen in Eingriff zu halten.

Gemäß einer Implementierung des zweiten Aspekts ist die Schneckengetriebebaugruppe Teil eines Lenkunterstützungssystems, das an eine elektrisch angetriebene Lenkung eines Nutzfahrzeugs gekoppelt ist.

Gemäß einer Implementierung des zweiten Aspekts enthält das Lager einen Innenring und einen Außenring, wobei sich der Innenring des Lagers mit der Schneckenwelle in Kontakt befindet und sich der Außenring des Lagers mit dem ersten Ende des Stifts in Kontakt befindet.

Gemäß einer Implementierung des zweiten Aspekts dreht sich die Schneckenwelle zusammen mit der Innenwelle des Lagers.

Gemäß einer Implementierung des zweiten Aspekts ist ein ovaler Ring in dem Hohlraum und neben dem Außenring des Lagers angeordnet.

Gemäß einer Implementierung des zweiten Aspekts ist das erste Ende des Stifts durch eine Öffnung in dem ovalen Ring eingesetzt, so dass sich das erste Ende des Stifts mit dem Lager in Kontakt befindet.

Gemäß einer Implementierung des zweiten Aspekts sind mehrere O-Ringe neben dem ovalen Ring angeordnet.

### KURZBESCHREIBUNG DER ZEICHNUNGEN

Die Ausführungsformen der vorliegenden Offenbarung werden im Folgenden basierend auf den beispielhaften Figuren ausführlicher beschrieben. Die vorliegende Offenbarung ist nicht auf die beispielhaften Ausführungsformen eingeschränkt. Alle hier beschriebenen und/oder veranschaulichten Merkmale können allein oder in verschiedenen Kombinationen gemäß den Ausführungsformen der vorliegenden Offenbarung kombiniert verwendet werden. Die Merkmale und Vorteile verschiedener Ausführungsformen der vorliegenden Offenbarung werden durch das Lesen der folgenden ausführlichen Beschreibung bezüglich der beigefügten Zeichnungen ersichtlich, die das Folgende veranschaulichen:
Fig. 1 veranschaulicht eine perspektivische Ansicht eines Lenksystems innerhalb eines Nutzfahrzeugs, das mit einem Lenkunterstützungssystem gekoppelt ist, gemäß einem oder mehreren Beispielen der vorliegenden Offenbarung;
Fig. 2 veranschaulicht eine perspektivische Ansicht eines Lenkunterstützungssystems mit einem Hauptgehäuse und den Komponenten einer Antirattervorrichtung;
Fig. 3 veranschaulicht eine perspektivische Ansicht eines Lenkunterstützungssystems, das ein Schneckenrad, eine Schneckenwelle und die Komponenten einer Antirattervorrichtung enthält, gemäß einem oder mehreren Beispielen der vorliegenden Offenbarung;
Fig. 4 veranschaulicht eine Querschnittsansicht des Lenkunterstützungssystems mit der Antirattervorrichtung gemäß einem oder mehreren Beispielen der vorliegenden Offenbarung; und
Fig. 5 veranschaulicht eine Querschnittsansicht der Antirattervorrichtung zur Verwendung in dem Lenkunterstützungssystem gemäß einem oder mehreren Beispielen der vorliegenden Offenbarung.

### AUSFÜHRLICHE BESCHREIBUNG

Im Folgenden werden Beispiele der vorgestellten Anmeldung bezüglich der beigefügten Figuren vollständiger beschrieben, in denen einige, aber nicht alle Beispiele der Anmeldung gezeigt sind. Die Anmeldung kann in verschiedenen Formen veranschaulicht werden und sollte nicht als auf die hier dargelegten Beispiele eingeschränkt ausgelegt werden; vielmehr werden diese Beispiele bereitgestellt, so dass die Anmeldung die geltenden gesetzlichen Anforderungen erfüllt. Wo es möglich ist, sind alle hier in der Einzahlform ausgedrückten Begriffe so gemeint, dass sie außerdem die Mehrzahlform enthalten und umgekehrt, wenn es nicht ausdrücklich anders angegeben ist. Der Begriff "einer" und/oder "eine", wie sie hier verwendet werden, sollen "einer oder mehrere" bedeuten, obwohl der Ausdruck "einer oder mehrere" hier außerdem verwendet wird. Weiterhin, wenn hier gesagt wird, dass etwas "auf" etwas anderem "basiert", kann es ebenfalls auf einem oder mehreren anderen Dingen basieren. Mit anderen Worten, wenn es nicht ausdrücklich anders angegeben, bedeutet "basierend auf", wie es hier verwendet wird, "wenigstens zum Teil basierend auf" oder "wenigstens teilweise basierend auf".

Herkömmliche Lenkungsbaugruppen von Nutzfahrzeugen enthalten Lenkunterstützungssysteme, die die Fahrzeugsteuerung verbessern und das Fahrerlebnis verbessern. Die Lenkunterstützungssysteme integrieren verschiedene Sensoren, elektronische Steuerungen und motorisierte Aktuatoren, von denen alle zusammenarbeiten, um basierend auf der Fahrzeuggeschwindigkeit, des Lenkwinkels und anderen Faktoren eine natürliche Straßenrückmeldung zu simulieren. Die mechanischen Komponenten von Lenkunterstützungssystemen wie Lager, Buchsen oder Getriebesysteme entwickeln Lücken oder Spiel, was ein Rattergeräusche, Schwingung und Rauigkeit im Lenksystem verursacht und den Verschleiß der Lenkunterstützungssysteme beschleunigen kann. Gemäß einigen Ausführungsformen enthalten die Lenkunterstützungssysteme ein Schneckenrad und eine Schneckenwelle. Das Schneckenrad enthält mehrere Zähne, die entlang des Umfangs des Schneckenrads angeordnet sind. Die Schneckenwelle enthält ein Gewinde, das konfiguriert ist, mit den mehreren Zähnen des Schneckenrads zu wechselwirken. Die Bauform herkömmlicher Lenkunterstützungssysteme ermöglicht es der Schneckenwelle, sich frei zu bewegen, was zu Bedingungen führt, in denen die Schneckenwelle den Kontakt mit der Schneckenschraube verlieren kann. Die freie Bewegung der Schneckenwelle führt zu einem Rattern in den Lenkunterstützungssystemen.

Die vorliegende Offenbarung beschreibt die Verwendung einer Antirattervorrichtung, um die Schneckenwelle in ständigen Kontakt mit dem Schneckenrad der Lenkunterstützungssysteme zu halten. Die Ausführungsformen der vorliegenden Offenbarung beschreiben die Verwendung einer Kombination aus einem Drehlager, einem Stift, einer Feder und einem Stopfen, um eine Kraft auf die Schneckenwelle auszuüben, so dass sich diese in ständigen Kontakt mit dem Schneckenrad befindet, wodurch das Rattern der Schneckenwelle verringert wird. Durch das Installieren einer Antirattervorrichtung in einem Lenkunterstützungssystem können bestehende Lenkunterstützungssysteme langlebiger gemacht werden und eine überlegene Leistung und Zuverlässigkeit beim Betrieb eines Nutzfahrzeugs bereitstellen. Die Antirattervorrichtung, wie sie in den Lenkunterstützungssystemen installiert ist, kann außerdem die Möglichkeit einer Betriebsgeräuschemission verringern, die aufgrund von langfristigem Verschleiß der Zahnflächen, z. B. des Schneckenrads und der Schneckenwelle, entwickelt werden kann.

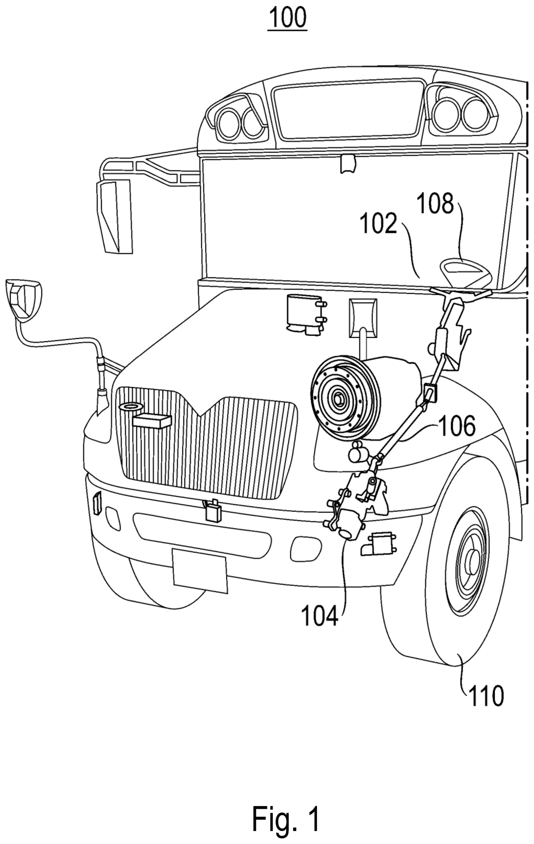

Fig. 1 veranschaulicht eine perspektivische Ansicht eines mit einem Lenkunterstützungssystem gekoppelten Lenksystems innerhalb eines Nutzfahrzeugs gemäß einem oder mehreren Beispielen der vorliegenden Offenbarung. Die perspektivische Ansicht 100 nach Fig. 1 stellt ein Nutzfahrzeug 110 dar, das eine Lenksäule 102 enthält. Das Lenksystem 102 enthält ein Lenkrad 108, eine Lenksäule 106 und ein Lenkunterstützungssystem 104. Gemäß einigen Ausführungsformen kann das Lenkunterstützungssystem 104 ein ReAx-Modul (Reaktionsmodul) sein. Gemäß einigen Ausführungsformen kann das Lenkunterstützungssystem 104 an ein Lenkgetriebe gekoppelt sein. Das Lenkgetriebe kann an die Radbaugruppen des Nutzfahrzeugs 110 gekoppelt sein.

Gemäß einigen Ausführungsformen wird ein von einem Fahrer des Nutzfahrzeugs 110 am Lenkrad 108 empfangener Lenkbefehl über die Lenksäule 106 zu dem Lenkgetriebe und zu den Radbaugruppen des Nutzfahrzeugs 110 übertragen. Gemäß einigen Ausführungsformen kann das Lenkunterstützungssystem 104 den Fahrer des Nutzfahrzeugs basierend auf der durch den Fahrer des Nutzfahrzeugs am Lenkrad 108 bereitgestellten Lenkeingabe unterstützen. Das Lenkunterstützungssystem kann z. B. ein Rückkopplungsdrehmoment auf das Lenkrad bereitstellen, was dem Fahrer ermöglicht, beim Lenken einen gesteuert Widerstand zu spüren.

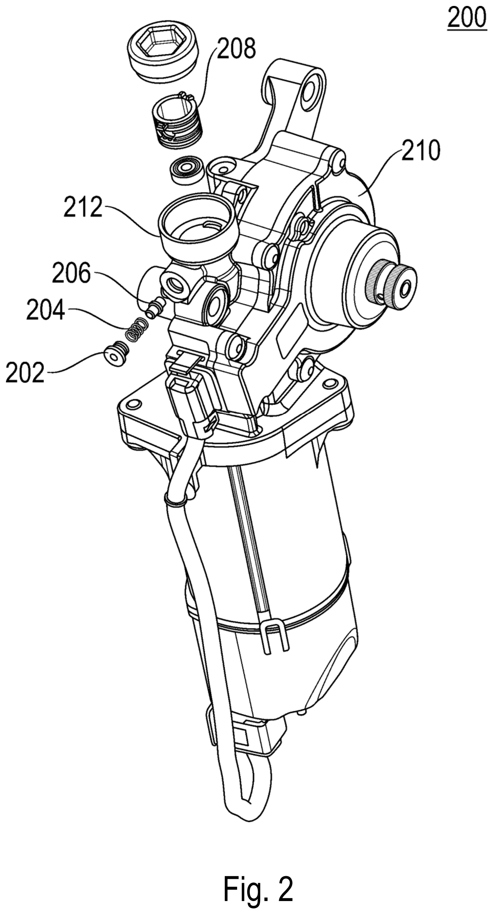

Fig. 2 veranschaulicht eine perspektivische Ansicht eines Lenkunterstützungssystems mit einem Hauptgehäuse und den Komponenten einer Antirattervorrichtung gemäß einem oder mehreren Beispielen der vorliegenden Offenbarung. Die perspektivische Ansicht 200 nach Fig. 2 stellt ein Lenkunterstützungssystem 104 dar. Für die Zwecke dieser Offenbarung wird auf das Lenkunterstützungssystem als ein ReAx-Modul verwiesen. Das Lenkunterstützungssystem 104 enthält ein Hauptgehäuse 214 und einen Gehäusedeckel 210. Gemäß einigen Ausführungsformen können ein Schneckenrad und eine Schneckenwelle des Lenkunterstützungssystems 104 innerhalb des Hauptgehäuses 214 angeordnet sein. Ein Gehäusedeckel 210 kann an das Hauptgehäuse 214 gekoppelt sein, um das Schneckenrad abzudecken.

Gemäß einigen Ausführungsformen kann das Hauptgehäuse 214 Öffnungen enthalten, die den Zugriff auf die Schneckenwelle ermöglichen. Eine erste Öffnung 212 des Hauptgehäuses 214 kann das Einsetzen eines Lagers 208 ermöglichen. Das Lager 208 kann verwendet werden, so dass es einen ersten Endabschnitt der Schneckenwelle umgibt, und kann einen Innenring und einen Außenring enthalten. Gemäß einigen Ausführungsformen kann der Innenring des Lagers ermöglichen, dass sich das erste Ende der Schneckenwelle dreht, während der Außenring stationär bleibt. Ein zweites Ende (z. B. gegenüber dem ersten Ende) der Schneckenwelle kann an eine Motorwelle gekoppelt sein.

Gemäß derartigen Ausführungsformen kann eine zweite Öffnung 216 des Hauptgehäuses 214 einen Durchgang zwischen einer Außenseite des Hauptgehäuses 214 und einem inneren Hohlraum des Hauptgehäuses 214 erzeugen. Ein Stift 206, eine Feder 204 und ein Stopfen 202 können über die Öffnung 216 innerhalb des Durchgangs des Hauptgehäuses 214 eingesetzt sein. Gemäß einigen Ausführungsformen kann der Stift 206 so angeordnet sein, dass ein erstes Ende des Stifts 206 dem Außenring des Lagers 208 benachbart ist. Die Feder 204 kann in den durch die Öffnung 216 erzeugten Durchgang eingesetzt und über dem Stift 206 angeordnet sein, wobei ein Stopfen 202 verwendet werden kann, um die zweite Öffnung 216 des Hauptgehäuses 214 zu verschließen. Gemäß einigen Ausführungsformen kann der Stopfen 202 die Feder 204 zusammendrücken, die wiederum eine Vorbelastungskraft auf den Stift 206 ausüben kann. Die auf den Stift 206 ausgeübte Vorbelastungskraft kann den Stift 206 in Richtung des Lagers 208 drücken, um die Schneckenwelle in ständigen Kontakt mit dem Schneckenrad zu halten.

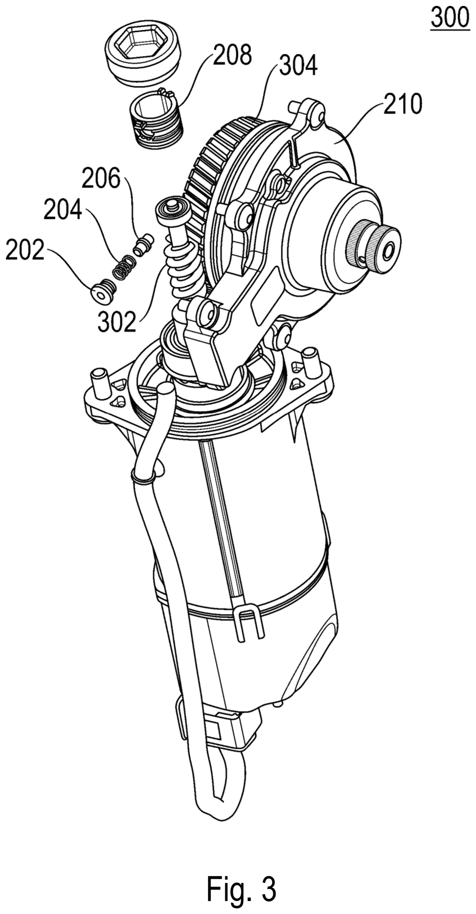

Fig. 3 veranschaulicht eine perspektivische Ansicht eines Lenkunterstützungssystems, das ein Schneckenrad, eine Schneckenwelle und Komponenten einer Antirattervorrichtung enthält, gemäß einem oder mehreren Beispielen der vorliegenden Offenbarung. Die perspektivische Ansicht 300 nach Fig. 3 stellt ein Lenkunterstützungssystem 104 nach dem Entfernen des (in Fig. 2 gezeigten) Hauptgehäuses 214 dar. Eine Schneckenwelle 302 und ein Schneckenrad 304, wie in Fig. 3 gezeigt ist, können innerhalb des Hauptgehäuses 214 des Lenkunterstützungssystems 104 angeordnet sein. Der Gehäusedeckel 210 kann verwendet werden, um das Schneckenrad 304 abzudecken.

Ein Lager 208 kann mechanisch mit der Schneckenwelle 302 gekoppelt sein. Gemäß einigen Ausführungsformen kann das Lager 208 verwendet werden, so dass es einen ersten Endabschnitt der Schneckenwelle 208 umgibt. Das Lager 208 kann verwendet werden, so dass es einen Abschnitt der Schneckenwelle umgibt, und kann einen Innenring und einen Außenring enthalten. Ein zweites Ende (z. B. gegenüber dem ersten Ende) der Schneckenwelle kann an eine Motorwelle gekoppelt sein. Gemäß einigen Ausführungsformen kann es der Innenring des Lagers der Schneckenwelle ermöglichen, sich zu drehen, während der Außenring stationär bleibt. Ein Stift 206 kann so angeordnet sein, dass ein erstes Ende des Stifts 206 dem Außenring des Lagers 208 benachbart ist. Die Feder 204 kann über dem Stift 206 angeordnet sein, wobei ein Stopfen 202 verwendet werden kann, um die Feder 204, den Stift 206 und das Lager 208 an Ort und Stelle zu halten. Gemäß einigen Ausführungsformen kann der Stopfen 202 verwendet werden, um die zweite Öffnung 216 des Hauptgehäuses 214 zu verschließen (wie in Fig. 2 gezeigt ist). Gemäß einigen Ausführungsformen kann der Stopfen 202 die Feder 204 zusammendrücken, die wiederum eine Vorbelastungskraft auf den Stift 206 ausüben kann. Die auf den Stift 206 ausgeübte Vorbelastungskraft kann den Stift 206 in Richtung des Lagers 208 drücken, um die Schneckenwelle in ständigen Kontakt mit dem Schneckenrad zu halten.

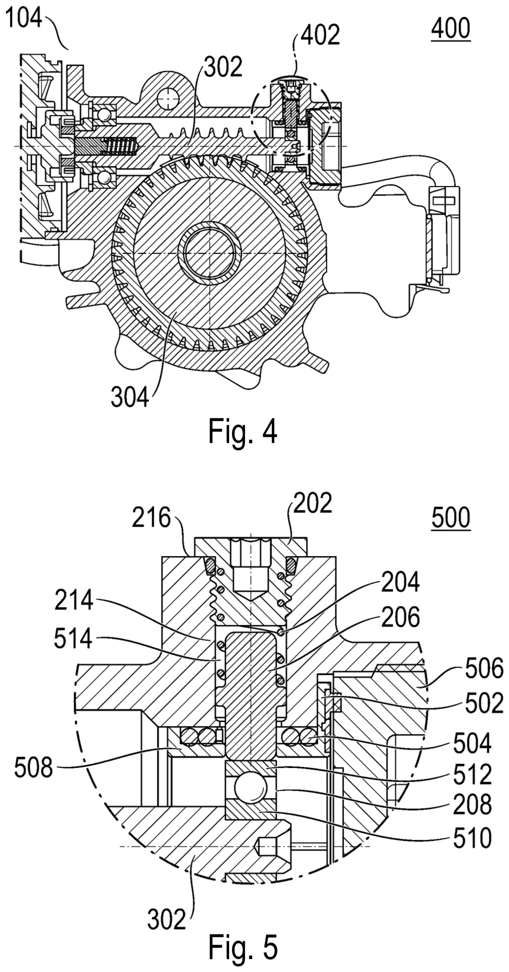

Fig. 4 veranschaulicht eine Querschnittsansicht des Lenkunterstützungssystems mit der Antirattervorrichtung gemäß einem oder mehreren Beispielen der vorliegenden Offenbarung. Die Querschnittsansicht 400 des Lenkunterstützungssystems 104 stellt ein Schneckenrad 304 und eine Schneckenwelle 302 dar. Wie in Fig. 4 gezeigt ist, weist das Schneckenrad 304 mehrere Zähne auf, die entlang eines Umfangs des Schneckenrads 304 angeordnet sind. Die am Umfang des Schneckenrads 304 angeordneten Zähne greifen in das Gewinde der Schneckenwelle 302 ein. Während des Betriebs des Nutzfahrzeugs kann sich das Gewinde der Schneckenwelle 302 von den Zähnen des Schneckenrads 304 lösen. Das Lösen der Schneckenwelle 302 vom Schneckenrad 304 kann außerdem zu Geräuschen während des Betriebs des Lenkunterstützungssystems 104 führen. Eine Antirattervorrichtung 402 kann verwendet werden, um eine Kraft auf die Schneckenwelle 302 auszuüben, so dass sich das Gewinde der Schneckenwelle 302 in ständigen Kontakt mit den entsprechenden Zähnen des Schneckenrads 304 befindet. Die Antirattervorrichtung 402 wird bezüglich Fig. 5 ausführlich beschrieben.

Fig. 5 veranschaulicht eine Querschnittsansicht der Antirattervorrichtung zur Verwendung in dem Lenkunterstützungssystem gemäß einem oder mehreren Beispielen der vorliegenden Offenbarung. Die Querschnittsansicht 500 stellt eine Antirattervorrichtung dar, die in das Hauptgehäuse 214 des Lenkunterstützungssystems 104 integriert ist. Eine Öffnung 216 im Hauptgehäuse 214 erzeugt einen Durchgang 514, der sich von einem Rand des Hauptgehäuses 214 zu einem inneren Hohlraum des Hauptgehäuses 214 erstreckt, in dem die Schneckenwelle 302 angeordnet ist. Gemäß einigen Ausführungsformen kann der Durchgang 514 eine Außenseite des Hauptgehäuses 214 mit dem inneren Hohlraum des Hauptgehäuses 214 verbinden. Gemäß einigen Ausführungsformen können die Komponenten der Antirattervorrichtung 402 innerhalb des Durchgangs 514 enthalten sein. Die Antirattervorrichtung 402 kann ein Lager 208, einen Stift 206, eine Feder 204 und einen Stopfen 202 enthalten.

Das Lager 208 der Antirattervorrichtung 402 umgibt einen ersten Abschnitt der Schneckenwelle 302. Gemäß einigen Ausführungsformen weist das Lager 208 einen Innenring 510 und einen Außenring 512 auf. Der Innenring 510 ermöglicht es dem ersten Ende der Schneckenwelle 302, sich zu drehen, während der Außenring 512 stationär bleibt. Das Lager 208 kann von einem ovalen Ring (z. B. einem Klappgehäuse) 508 umgeben sein. Das Klappgehäuse 508 kann verwendet werden, um die Antirattervorrichtung 402 mit einem Endstopfen 506 des Lenkunterstützungssystems 104 zu koppeln. Zusätzlich können O-Ring-Bänder 504 verwendet werden, um das Klappgehäuse 508 an Ort und Stelle zu halten.

Ein Stift 206 kann in dem Durchgang 514 angeordnet sein. Gemäß einigen Ausführungsformen kann der Stift 206 durch eine Öffnung in dem Klappgehäuse 508 einsetzt sein, so dass ein erstes Ende des Stifts dem Außenring 512 des Lagers 208 benachbart angeordnet sein kann. Die Feder 204 kann in dem Durchgang 514 über dem Stift 206 angeordnet sein, wobei ein Stopfen 202 verwendet werden kann, um die Öffnung 216 des Durchgangs 514 zu verschließen. Gemäß einigen Ausführungsformen kann der Stopfen 202 die Feder 204 zusammendrücken, die wiederum eine Vorbelastungskraft auf den Stift 206 ausüben kann. Die auf den Stift 206 ausgeübte Vorbelastungskraft kann den Stift 206 in Richtung des Lagers 208 drücken, um die Schneckenwelle in ständigen Kontakt mit dem Schneckenrad zu halten.

Während der Gegenstand der vorliegenden Offenbarung in den Zeichnungen ausführlich veranschaulicht und in der vorstehenden Beschreibung ausführlich beschrieben worden ist, sollen eine derartige Veranschaulichung und Beschreibung als veranschaulichend oder beispielhaft und nicht als einschränkend betrachten werden. Jede hier gemachte Aussage, die die vorliegende Offenbarung charakterisiert, ist außerdem als veranschaulichend oder beispielhaft und nicht als einschränkend zu betrachten, da die vorliegende Offenbarung durch die Ansprüche definiert ist. Es wird erkannt, dass Änderungen und Modifikationen durch die Durchschnittsfachleute auf dem Gebiet innerhalb des Schutzumfangs der folgenden Ansprüche vorgenommen werden können, die jede Kombination von Merkmalen aus verschiedenen oben beschriebenen Ausführungsformen enthalten können.

Die in den Ansprüchen verwendeten Begriffe sollten so ausgelegt werden, dass sie die breiteste sinnvolle Interpretation aufweisen, die mit der vorstehenden Beschreibung konsistent ist. Die Verwendung des Artikels "einer" oder "der/die/das" beim Vorstellen eines Elements sollte z. B. nicht so ausgelegt werden, dass sie mehrere Elemente ausschließt. Ebenfalls sollte die Angabe "oder" als inklusiv interpretiert werden, so dass die Angabe "A oder B" nicht "A und B" ausschließt, wenn es nicht aus dem Kontext oder der vorstehenden Beschreibung klar ist, dass nur eines von A und B gemeint ist. Ferner sollte die Angabe "wenigstens eines von A, B und C" als eines oder mehrere aus einer Gruppe von Elementen, die aus A, B und C besteht, interpretiert werden, wobei sie nicht so interpretiert werden sollte, dass wenigstens eines von jedem der aufgeführten Elemente A, B und C erforderlich ist, ungeachtet dessen, ob A, B und C als Kategorien oder anderweitig in Beziehung stehen. Überdies sollte die Angabe "A, B und/oder C" oder "wenigstens eines von A, B oder C" so interpretiert werden, dass sie jede einzelne Entität aus den aufgeführten Elementen, z. B. A, jede Teilmenge aus den aufgeführten Elementen, z. B. A und B, oder die gesamte Liste der Elemente A, B und C enthält.

## Patentansprüche

1. Schneckengetriebebaugruppe, die Folgendes umfasst:
eine Gehäuseeinheit mit einem Hohlraum;
ein Schneckenrad, das drehbar in dem Hohlraum der Gehäuseeinheit angeordnet ist und mehrere Zähne aufweist, die entlang eines Umfangs des Schneckenrads angeordnet sind;
eine Schneckenwelle, die in dem Hohlraum des Gehäuses angeordnet ist, sich in einer Richtung parallel zu einer Ebene des Schneckenrades erstreckt und ein Gewinde aufweist, das konfiguriert ist, in die mehreren Zähne einzugreifen, wobei ein erstes Ende der Schneckenwelle drehbar in einem Lager angebracht ist und ein zweites Ende der Schneckenwelle mechanisch an eine Motorwelle koppelbar ist, wobei das Gehäuse einen Durchgang definiert, der sich senkrecht zu der Richtung der Schneckenwelle erstreckt und den Hohlraum mit einer Außenseite des Gehäuses verbindet.

2. Schneckengetriebebaugruppe nach Anspruch 1, wobei die Schneckengetriebebaugruppe ein Teil eines Lenkunterstützungssystems ist, das an eine elektrisch angetriebene Lenkung eines Nutzfahrzeugs gekoppelt ist.

3. Schneckengetriebebaugruppe nach Anspruch 1, wobei das Lager einen Innenring und einen Außenring enthält und wobei sich der Innenring des Lagers mit der Schneckenwelle in Kontakt befindet und sich der Außenring des Lagers mit dem ersten Ende des Stifts in Kontakt befindet.

4. Schneckengetriebebaugruppe nach Anspruch 3, wobei sich die Schneckenwelle zusammen mit der Innenwelle des Lagers dreht.

5. Schneckengetriebebaugruppe nach Anspruch 4, wobei ein ovaler Ring in dem Hohlraum und neben dem Außenring des Lagers angeordnet ist.

6. Schneckengetriebebaugruppe nach Anspruch 5, wobei das erste Ende des Stifts durch eine Öffnung in dem ovalen Ring eingesetzt ist, so dass sich das erste Ende des Stifts mit dem Lager in Kontakt befindet.

7. Schneckengetriebe nach Anspruch 6, wobei mehrere O-Ringe neben dem ovalen Ring angeordnet sind.

8. Verfahren zum Verringern des Ratterns in einer Schneckengetriebebaugruppe, wobei das Verfahren Folgendes umfasst:
Bereitstellen einer Gehäuseeinheit mit einem Hohlraum;
Bereitstellen eines Schneckenrades, das drehbar im Hohlraum des Gehäuses angeordnet ist und mehrere Zähne aufweist, die entlang eines Umfangs des Schneckenrades angeordnet sind;
Bereitstellen einer Schneckenwelle, die in dem Hohlraum des Gehäuses angeordnet ist, sich in einer Richtung parallel zu einer Ebene des Schneckenrades erstreckt und ein Gewinde aufweist, das konfiguriert ist, in die mehreren Zähne einzugreifen, wobei ein erstes Ende der Schneckenwelle drehbar in einem Lager angebracht ist und ein zweites Ende der Schneckenwelle mechanisch an eine Motorwelle koppelbar ist, wobei das Gehäuse einen Durchgang definiert, der sich senkrecht zu der Richtung der Schneckenwelle erstreckt und den Hohlraum mit einer Außenseite des Gehäuses verbindet;
Anordnen eines Stifts in dem Durchgang, wobei sich ein erstes Ende des Stifts mit dem Lager in Kontakt befindet;
Bereitstellen eines Steckbolzens, der an einer Öffnung des Durchgangs angeordnet ist; und
Anordnen einer Feder in dem Durchgang zwischen dem Steckbolzen und dem Stift, wobei die Feder vorbelastet ist, um eine Kraft weg von dem Steckbolzen auf das Lager auszuüben, um die Schneckenwelle in der Richtung des Schneckenrades zu drücken, um das Gewinde der Schneckenwelle ständig mit den mehreren Zähnen in Eingriff zu halten.

9. Verfahren nach Anspruch 8, wobei die Schneckengetriebebaugruppe ein Teil eines Lenkunterstützungssystems ist, das an eine elektrisch angetriebene Lenkung eines Nutzfahrzeugs gekoppelt ist.

10. Verfahren nach Anspruch 8, wobei das Lager einen Innenring und einen Außenring enthält und wobei sich der Innenring des Lagers mit der Schneckenwelle in Kontakt befindet und sich der Außenring des Lagers mit dem ersten Ende des Stifts in Kontakt befindet.

11. Verfahren nach Anspruch 10, wobei sich die Schneckenwelle zusammen mit der Innenwelle des Lagers dreht.

12. Verfahren nach Anspruch 11, wobei ein ovaler Ring in dem Hohlraum und neben dem Außenring des Lagers angeordnet ist.

13. Verfahren nach Anspruch 12, wobei das erste Ende des Stifts durch eine Öffnung in dem ovalen Ring eingesetzt ist, so dass sich das erste Ende des Stifts mit dem Lager in Kontakt befindet.

14. Verfahren nach Anspruch 13, wobei mehrere O-Ringe neben dem ovalen Ring angeordnet sind.
